# EUROPÄISCHE PATENTSCHRIFT

(11) **EP 1 529 964 B1**
(45) Veröffentlichungstag und Bekanntmachung des Hinweises auf die Patenterteilung: **10.10.2007**
(21) Anmeldenummer: 03104124.7
(22) Anmeldetag: 07.11.2003
(51) Int. Cl.: F15B 13/00, F15B 13/04, F16L 29/00

(54) **Hydraulische Kupplungsvorrichtung**
Hydraulic coupling device
Dispositif de couplage hydraulique

(43) Veröffentlichungstag der Anmeldung: 11.05.2005
(73) Patentinhaber: Moog-Hydrolux S.a.r.l., 1019 Luxembourg (LU)
(72) Erfinder: Jost, Frank, 54343 Föhren (DE); Kohlhaas, Reiner, 54317 Osburg (DE)
(74) Vertreter: Schmitt, Armand

(56) Entgegenhaltungen:
- EP-A- 1 074 749
- US-A- 5 794 651
- US-A- 5 873 561

## Beschreibung

Die vorliegende Erfindung betrifft eine Art hydraulischer Kupplungsvorrichtung, die z.B. in EP 1 074 749 gezeigt wird.

### Stand der Technik

Werkzeugmaschinen mit auswechselbaren, hydraulisch betätigten Werkzeugen sind seit langem bekannt. Die für die Steuerung der Hydraulikzylinder des Werkzeugs benötigten Hydraulikventile sind in einem Steuerblock integriert, der wegen seiner Baugröße meistens außerhalb des Werkzeuges am Maschinenständer angeordnet ist. Die Verbindung der Ventil-Arbeitsanschlüsse des Steuerblocks zu den Arbeitsanschlüssen der Hydraulikzylinder am Werkzeug erfolgt über Rohr- bzw. Schlauchleitungen mit lösbaren hydraulischen Schraub- oder Steck-Kupplungen. Bei einem Werkzeugwechsel müssen diese Verbindungskupplungen manuell getrennt und nach erfolgtem Wechsel wieder eingekuppelt werden. Dieser manuelle Kupplungsvorgang ist natürlich zeit- und arbeitsaufwendig.

### Zusammenfassung der Erfindung

Eine Aufgabe der vorliegenden Erfindung ist es, eine hydraulische Kupplungsvorrichtung zu schaffen, die es mit einfachem Aufwand ermöglicht den Kupplungsvorgang zwischen einem hydraulischen Versorgungsteil, wie z.B. einem Steuerblock, und einem auswechselbaren, hydraulischen Verbraucherteil zu optimieren. Diese Aufgabe wird durch eine hydraulische Kupplungsvorrichtung nach Anspruch 1 gelöst.

Eine erfindungsgemäße hydraulische Kupplungsvorrichtung umfasst somit einen versorgungsseitigen Kupplungsblock und einen verbraucherseitigen Kupplungsblock, mit jeweils einer Ankupplungsfläche, mindestens einem hydraulischen Anschlusskanal und einem Cartridgeventil, das dem mindestens einem Anschlusskanal zugeordnet ist. Das versorgungsseitige Cartridgeventil weist folgende Teile auf: eine Ventilhülse mit einer Stirnfläche und einer Axialbohrung, die in dieser Stirnfläche eine stirnseitige Mündung ausbildet, vor der ein Ventilsitz angeordnet ist, wobei diese Ventilhülse derart in eine Stufenbohrung des versorgungsseitige Kupplungsblocks eingesetzt ist, dass die Stirnfläche der Ventilhülse in seiner Ankupplungsfläche liegt; einen Cartridgekegel der axial verschiebbar in die Axialbohrung der Ventilhülse eingepasst ist, wobei sein erstes Ende in Schließstellung den Ventilsitz abdichtet und sein zweites Ende in einer Steuerkammer eine Steuerfläche ausbildet, derart dass ein Steuerdruck in dieser Steuerkammer auf den Cartridgekegel eine Druckkraft in Richtung Schließstellung ausübt; und eine Schließfeder, die dem Cartridgekegel derart zugeordnet ist, dass sie auf den Cartridgekegel eine Druckkraft in Richtung Schließstellung ausübt. Der hydraulische Anschlusskanal mündet über seitliche Öffnungen der Ventilhülse in eine Ventilkammer des versorgungsseitigen Cartridgeventils derart ein, dass ein Arbeitsdruck in dieser Ventilkammer auf den Cartridgekegel eine Druckkraft in Öffnungsrichtung ausübt. Das verbraucherseitige Cartridgeventil weist folgende Teile auf: eine Ventilhülse mit einer Stirnfläche und einer Axialbohrung, die in dieser Stirnfläche eine stirnseitige Mündung ausbildet vor der ein Ventilsitz angeordnet ist, wobei die Ventilhülse derart in eine Stufenbohrung des verbraucherseitigen Kupplungsblocks eingesetzt ist, dass ihre Stirnfläche in seiner Ankupplungsfläche liegt; ein Cartridgekegel der axial verschiebbar in die Axialbohrung der Ventilhülse eingepasst ist, wobei sein erstes Ende in Schließstellung den Ventilsitz abdichtet und sein zweites Ende in einer druckentlasteten Kammer liegt; und eine Schließfeder, die dem Cartridgekegel derart zugeordnet ist, dass sie auf den Cartridgekegel eine Druckkraft in Richtung Schließstellung ausübt. Die hydraulische Kupplungsvorrichtung umfasst weiterhin Anpressmittel zum Aneinanderpressen des versorgungsseitigen Kupplungsblocks an den verbraucherseitigen Kupplungsblock, derart dass die Ankupplungsflächen der Kupplungsblöcke aneinander liegen und die Cartridgeventile axial mit den Stirnflächen ihrer Ventilhülsen aneinander gepresst werden. Druckschaltmittel (umfassend z.B. ein oder mehrere hydraulische Schaltventile) ermöglichen eine kontrollierte Druckbelastung und Druckentlastung der Steuerkammer des versorgungsseitigen Cartridgeventils, derart dass:
a) bei Druckbelastung dieser Steuerkammer, der Druck in der Steuerkammer und die Schließfeder eine Schließkraft erzeugen, die größer als die Öffnungskraft des Arbeitsdrucks in der Ventilkammer des versorgungsseitigen Cartridgeventils ist, so dass das erste Cartridgeventil schließt, bzw. geschlossen bleibt; und
b) bei Druckentlastung dieser Steuerkammer, die Schließfeder des versorgungsseitigen Cartridgeventils eine Schließkraft erzeugt, die kleiner als die Öffnungskraft des Arbeitsdrucks in der Ventilkammer des versorgungsseitigen Cartridgeventils ist, so dass das versorgungsseitige Cartridgeventil öffnet, bzw. geöffnet bleibt.

Man wird zu schätzen wissen, dass die erfindungsgemäße hydraulische Kupplungsvorrichtung äußerst einfach im Aufbau ist, da die hydraulische Verbindung mit Standardbauteilen, wie Cartridgeventilen erzielt wird. Die Ankupplungsflächen können zudem ebene Flächen sein, wodurch der Platzbedarf zum Ein- und Auskuppeln äußerst gering ist, und die Positionierungsanforderungen an die beiden Kupplungsblöcke ebenfalls minimal sind (keine ineinandergreifende Teile). Durch eine einfache Drucksteuerung des versorgungsseitigen Cartridgeventils lässt sich der hydraulische Anschluss einfach und zuverlässig steuern. Die Ansteuerung der Druckschaltmittel kann hierbei auch elektrisch erfolgen, wodurch sich eine Sperr- und Entsperrfunktion für den Durchfluss auf einfachste Art und Weise in eine elektrische Maschinensteuerung einbinden lässt. Man beachte ebenfalls, dass der verbraucherseitige Kupplungsblock kein eigenes Steuersystem benötigt. Die als federbelastete Sitzventile ausgebildeten Cartridgeventile arbeiten weiterhin leckagefrei, verursachen sehr kleine Druckverluste und sind für Hochdruckanwendungen bis mindestens 350 bar geeignet. Es lässt sich zudem eine kurze, starre Verbindung zwischen dem hydraulischen Versorgungsteil, wie z.B. einem Steuerblock, und einem auswechselbaren, hydraulischen Verbraucherteil ohne Schläuche mit herkömmliche Steck-Kupplungen herstellen. Die dadurch geringere Ölelastizität ergibt einen steiferen Antrieb mit höherer Eigenfrequenz, größerer Kreisverstärkung und damit verbesserter Stellgenauigkeit.

Einer der beiden Kupplungsblöcke ist vorteilhaft verschiebbar auf einen Adapterblock montiert, so dass die Anpressmittel diesen Kupplungsblock an den anderen Kupplungsblock festziehen können. Zwischen dem verschiebbar montierten Kupplungsblock und seinem Adapterblock ist vorteilhaft mindestens eine Rückstellfeder derart angeordnet, dass sie nach dem Lösen der Anpressmittel, durch Verschieben dieses Kupplungsblocks einen Distanzspalt zwischen den beiden Ankupplungsflächen der Kupplungsblöcke herstellt. Hierdurch lassen sich die Kupplungsblöcke trennen, ohne dass man riskiert ihre Ankupplungsflächen zu beschädigen.

In einer bevorzugten Ausgestaltung weist der verschiebbar montierte Kupplungsblock mindestens ein Degenrohr auf, das in eine Bohrung seines Adapterblocks axial verschiebbar eingeführt ist, wobei der hydraulische Anschluss zwischen Kupplungsblock und Adapterblock über eine Längsbohrung im Degenrohr und eine Ringkammer im Adapterblock erfolgt, und wobei das Degenrohr derart gestaltet ist, dass es diese Ringkammer an zwei axial gegenüberliegenden Enden hydrostatisch ausgeglichen abdichtet.

Die Anpressmittel umfassen vorteilhaft Spannzylinder, welche am versorgungsseitigen Kupplungsblock angeordnet sind und Kupplungsköpfe aufweisen, die in entsprechende Nuten des verbraucherseitigen Kupplungsblocks eingreifen.

Die Ventilhülse eines der beiden anzukuppelnden Cartridgeventile weist in ihrer Stirnfläche bevorzugt eine axial wirkenden Ringdichtung auf, welche derart angeordnet ist, dass sie in Kupplungsstellung der beiden Kupplungsblöcke an die ringförmige Stirnfläche des gegenüberliegenden Cartridgeventils angedrückt wird.

Die Abdichtung zwischen den Stirnflächen der Cartridgeventile wird zudem vorteilhaft durch folgende Weiterbildung der erfindungsgemäßen Vorrichtung verbessert. Die Ventilhülse des verbraucherseitigen Cartridgeventils ist axial verschiebbar in die Stufenbohrung des verbraucherseitigen Kupplungsblocks eingesetzt, wobei sie in dieser Stufenbohrung eine Druckdifferenzfläche derart ausbildet, dass auf die Ventilhülse eine Druckkraft in Richtung des angekuppelten versorgungsseitigen Kupplungsblocks ausgeübt wird, wenn diese Druckdifferenzfläche in der Stufenbohrung mit Druck beaufschlagt wird. Auf die Ventilhülse des verbraucherseitigen Cartridgeventils wirkt somit eine, zum Arbeitsdruck proportionale Anpresskraft. In Mehrfachkupplungen werden axiale Einbautoleranzen der Cartridgeventile zudem automatisch ausgeglichen.

Eine erfindungsgemäße Vorrichtung kann sehr einfach als Mehrfachkupplung ausgebildet werden. Der versorgungsseitige und verbraucherseitige Kupplungsblock weist dann jeweils n Anschlusskanäle auf (n>1), denen jeweils ein Cartridgeventil zugeordnet ist. Bei angekuppelten Kupplungsblöcken werden die n versorgungsseitigen und n verbraucherseitigen Cartridgeventile dann axial mit den Stirnflächen ihrer Ventilhülsen aneinander gepresst.

Die n Cartridgeventile sind in ihrem jeweiligen Kupplungsblock bevorzugt in einer Reihe angeordnet, wobei die Anpressmittel zwei Spannzylinder umfassen, welche am versorgungsseitigen Kupplungsblock jeweils vor dem ersten und nach dem letzten Cartridgeventil angeordnet sind. Durch diese Anordnung wird eine optimale Verteilung der Anpresskraft erzielt.

### Figurenaufstellung

Im Folgenden wird nun eine bevorzugte Ausgestaltung der Erfindung anhand der beiliegenden Figuren beschrieben. Es zeigen:
- Fig. 1:: einen Querschnitt durch eine erfindungsgemäße Kupplungsvorrichtung;
- Fig. 2:: einen vergrößerten Ausschnitt der Fig. 1;
- Fig. 3:: ein hydraulisches Schaltschema einer erfindungsgemäßen Kupplungsvorrichtung; und
- Fig. 4:: einen Längsschnitt durch eine erfindungsgemäße Kupplungsvorrichtung.

### Beschreibung einer bevorzugten Ausgestaltung der Erfindung anhand der Figuren

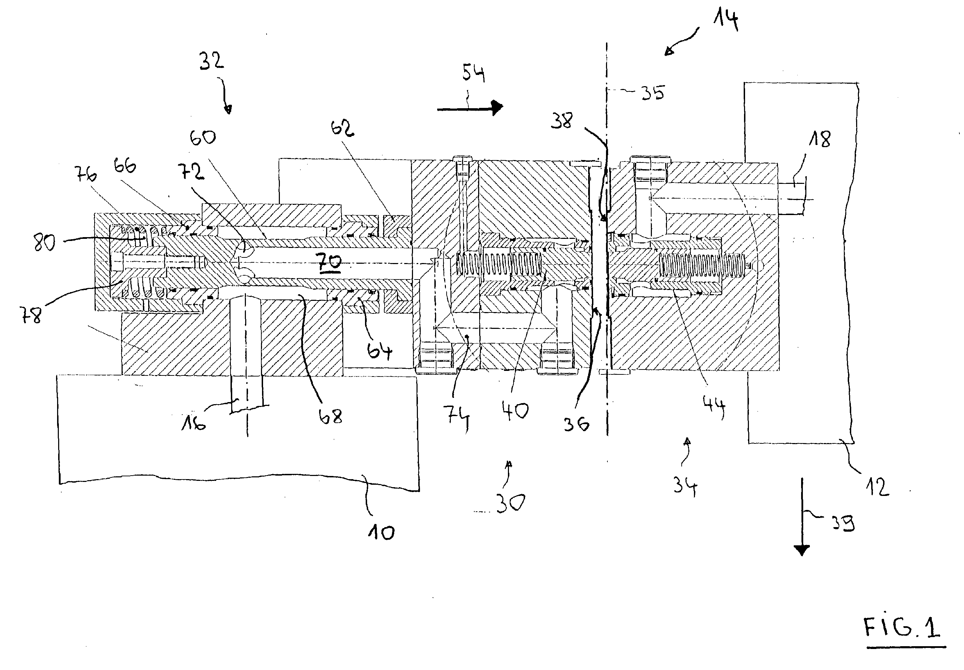

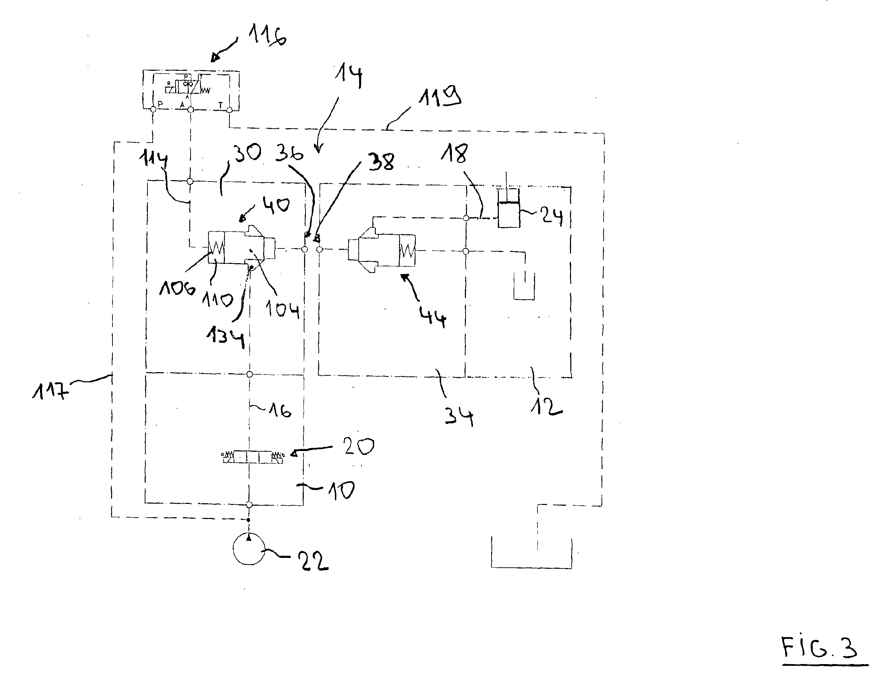

In Fig. 1 bezeichnet das Bezugszeichen 10 einen hydraulischen Steuerblock, der fest mit einer Maschine verbunden ist, und das Bezugszeichen 12 ein hydraulisch betätigtes, auswechselbares Werkzeug, das mittels einer erfindungsgemäßen Kupplungsvorrichtung 14 an den hydraulischen Steuerblock 10 angeschlossen ist und von diesem mit einer Hydraulikflüssigkeit unter Hochdruck versorgt wird. Die Maschine kann z.B. eine Pulvermetallpresse, und das Werkzeug 12 eine auswechselbare Werkzeugform mit mehreren Hydraulikzylindern sein, welche über Hydroventile im Steuerblock 10 angesteuert werden. Mit dem Bezugszeichen 16 ist ein Anschlusskanal in dem Steuerblock 10, und mit dem Bezugszeichen 18 ein Anschlusskanal in dem Werkzeug 12 bezeichnet. Wie aus dem Schaltschema der Fig. 3 ersichtlich, wird der Anschlusskanal 16 im Steuerblock 10 von einer Pumpe 22 über ein Funktionsventil 20 mit Hydrauliköl versorgt. Der Anschlusskanal 18 in dem Werkzeug 12 hingegen ist mit einem Arbeitsanschluss eines werkzeugseitigen Hydraulikzylinders 24 verbunden. Der Steuerblock 10 weist in der Regel eine Vielzahl von solchen Anschlusskanälen 16, und das Werkzeug 12 eine Vielzahl von Anschlusskanälen 18 auf. Diese Anschlusskanäle 16, 18 werden über die erfindungsgemäße Kupplungsvorrichtung 14 miteinander verbunden.

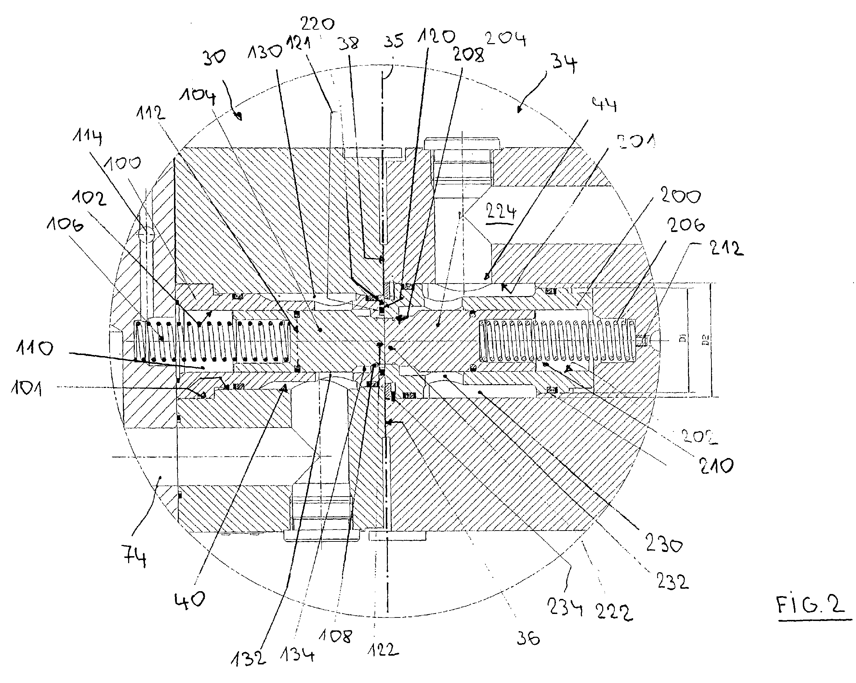

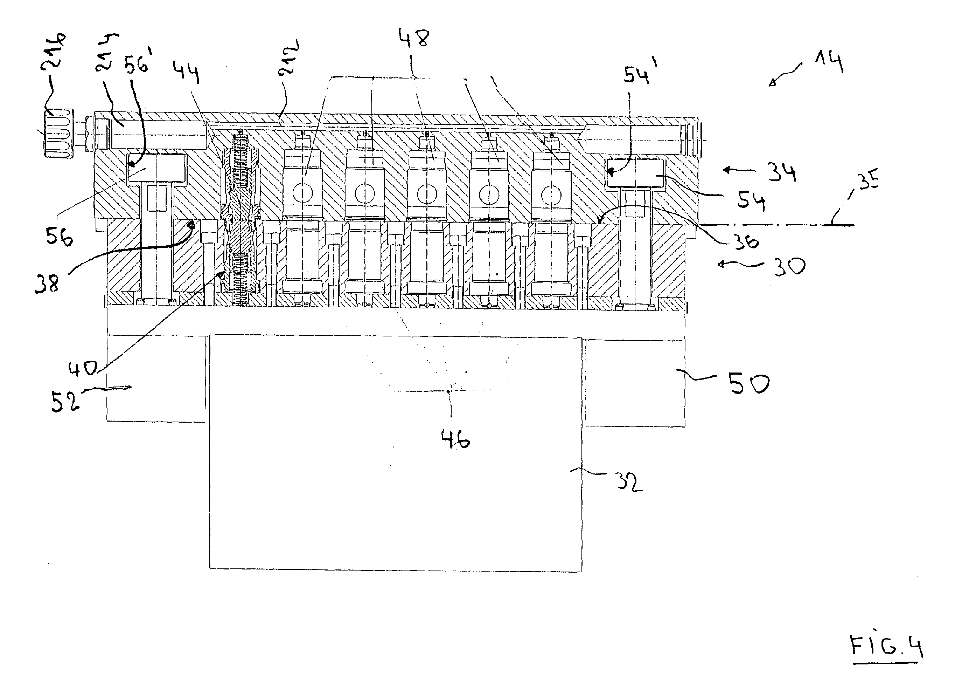

Die Kupplungsvorrichtung 14 umfasst im wesentlichen einen versorgungsseitigen Kupplungsblock 30, der mittels eines Adapterblocks 32 mit dem Steuerblock 10 verbunden ist, und einen verbraucherseitigen Kupplungsblock 34, der Bestandteil des austauschbaren Werkzeugs 12 ist. Die gestrichelte Linie 35 stellt die Kupplungsebene dar, d.h. die Ebene in welcher der versorgungsseitige Kupplungsblock 30 und der verbraucherseitige Kupplungsblock 34 mit ihren jeweiligen Ankupplungsflächen 36 und 38 aneinander stoßen. In Fig. 1 sind die beiden Kupplungsblöcke 30 und 34 in einem entkuppelten Zustand gezeigt und weisen einen Distanzspalt von einigen Millimetern zwischen den Ankupplungsflächen 36 und 38 auf. In dieser Stellung kann das Werkzeug 12, zwecks Austausch, parallel zur Kupplungsebene 35 bewegt werden, ohne dass die Ankupplungsflächen 36 und 38 beschädigt werden. In Fig. 1 ist eine solche Bewegung zum Beispiel durch den Pfeil 39 angedeutet. In Fig. 2 und Fig. 4 sind die beiden Kupplungsblöcke 30 und 34 im gekuppelten Zustand gezeigt, indem sie mit ihren Ankupplungsflächen 36, 38 fest aneinander gepresst werden.

Die in Fig. 4 im Längsschnitt gezeigte Kupplungsvorrichtung 14 ist, für die Verbindung von insgesamt sechs Anschlusskanälen im Steuerblock 10 mit sechs Anschlusskanälen im Werkzeug 12 ausgestattet. Hierzu sind sowohl in den versorgungsseitigen Kupplungsblock 30, als auch in den verbraucherseitigen Kupplungsblock 34 jeweils sechs Catridgeventile eingebaut. In Fig. 4 ist jedoch nur jeweils ein versorgungsseitiges Catridgeventil 40 im Kupplungsblock 30 und ein verbraucherseitiges Catridgeventil 44 im Kupplungsblock 34 gezeigt. Man erkennt jedoch in Fig. 4 ebenfalls fünf leere Bohrungen 46 im Kupplungsblock 30, bzw. fünf leere Bohrungen 48 im Kupplungsblock 34, für die Aufnahme der restlichen fünf versorgungsseitigen, bzw. fünf verbraucherseitigen Catridgeventile.

Die in Fig. 4 gezeigte Kupplungsvorrichtung 14 umfasst weiterhin zwei hydraulische Spannzylinder 50, 52, welche am versorgungsseitigen Kupplungsblock 30 angeordnet sind. Diese Spannzylinder 50, 52 weisen Kupplungsköpfe 54, 56 auf, welche in T-Nuten 54', 56' des verbraucherseitigen Kupplungsblocks 34 formschlüssig eingreifen, um die beiden Kupplungsblöcke 30, 34 mit ihren Ankupplungsflächen 36, 38 fest aneinander zu pressen. Die T-Nuten 54', 56' sind hierbei so angeordnet, dass beim Verschieben des Kupplungsblocks 34 parallel zur Kupplungsebene 35 in seine in Fig. 1 gezeigte Endstellung, die Kupplungsköpfe 54, 56 mit den T-Nuten 54', 56' in Bewegungsrichtung des Werkzeugs 12 fluchten. Man beachte, dass die beiden Spannzylinder 50, 52 an den beiden Enden des versorgungsseitigen Kupplungsblocks 30 angeordnet sind, um einen möglichst gleichförmigen Anpressdruck der beiden Ankupplungsflächen 36, 38 zu gewährleisten.

Im Folgenden wird nun wieder auf die Fig. 1 verwiesen. Der versorgungsseitige Kupplungsblock 30 wird von dem Adapterblock 32 derart getragen, dass er in Anpressrichtung der Spannzylinder 50, 52 (die in Fig. 1 durch den Pfeil 54 dargestellt wird) relativ zum Adapterblock 32 verschiebbar ist. Die Verbindung zwischen dem Adapterblock 32 und dem Kupplungsblock 30 erfolgt hierbei über Degenrohre 60, die den Kupplungsblock 30 tragen und zugleich die hydraulischen Verbindungen zwischen den Anschlüssen 16 und dem verschiebbaren Kupplungsblock 30 herstellen. In der beschriebenen Kupplungsvorrichtung 14 gibt es folglich sechs dieser Degenrohre 60. Ein solches Degenrohr 60 ist jeweils an einem Ende mittels einem Klemmflansch 62 fest am versorgungsseitigen Kupplungsblock 30 befestigt. Im Adapterblock 32 ist das Degenrohr 60 verschiebbar in zwei Dichtungsbuchsen 64, 66 gelagert, welche im Adapterblock 32 einen Ringraum 68 um das Degenrohr 60 beidseitig abdichten. Durch eine axiale Innenbohrung 70 im Degenrohr 60 und seitliche Querbohrungen 72 zum Ringraum 68 wird die ständige hydraulische Verbindung zwischen dem Anschluss 16 im Steuerblock 10 und einem Anschlusskanal 74 in dem verschiebbaren Kupplungsblock 30 hergestellt. Es ist hervorzuheben, dass die beiden Dichtungsbuchsen 64, 66 jeweils einen gleich großen Querschnitt des Degenrohrs 60 abdichten, so dass das Degenrohr 60 hydrostatisch druckausgeglichen ist. Durch den Druck im Ringraum 68 können folglich keine Druckkräfte auf das Degenrohr 60 übertragen werden, welche zu unerwünschten Bewegungen des Kupplungsblocks 30 führen würden. Das zweite Ende des Degenrohrs 60 ist durch die Dichtungsbuchse 66 in einen drucklosen Federraum 76 geführt und trägt hierin einen Federteller 78. Eine Rückstellfeder 80 ist zwischen dem Federteller 78 und der Dichtungsbuchse 66 derart eingespannt, dass sie auf das Degenrohr 60 eine Federkraft in entgegengesetzte Richtung des Pfeils 54 ausübt. Hierdurch wird gewährleistet, dass bei nicht betätigten Spannzylindern 50, 52, der verschiebbare Kupplungsblock 30 stets auf Anschlag gegen den Adapterblock 32 liegt, wodurch zwischen den beiden Ankupplungsflächen 36 und 38 der bereits erwähnte Distanzspalt von einigen Millimetern vorliegt.

Anhand der Fig. 2 wird nun der Aufbau der beiden Kupplungsblöcke 30 und 34 beschrieben.

Die hydraulische Verbindung zwischen den beiden Kupplungsblöcken 30, 34 erfolgt über die axial fluchtenden Cartridgeventile 40 und 44 in den zusammengepressten Kupplungsblöcken 30 und 34 (pro Anschluss 16 umfasst die Kupplungsvorrichtung 14 ein solches Cartridgeventilpaar 40, 44). Beide Cartridgeventile 40, 44 sind als federbelastete Kegelsitzventile ausgeführt, so dass in der geschlossenen Grundstellung eine hermetische Abdichtung besteht und im entkuppeltem Zustand kein Leckölstrom nach Außen fließen kann.

Das versorgungsseitige Cartridgeventil 40 ist als hydraulisch steuerbares, federbelastetes 2-Wege-Einbauventil aufgebaut. Es umfasst eine Ventilhülse 100, die in eine Stufenbohrung 101 des Kupplungsblocks 30 eingesetzt ist. Diese Ventilhülse 100 weist eine Axialbohrung 102 auf, in der ein Cartridgekegel 104 derart eingepasst ist, dass er hierin axial verschiebbar ist. Eine Schließfeder 106 drückt diesen Cartridgekegel 104 in Richtung eines Ventilsitzes 108 am vorderen Ende der Axialbohrung 102. Der Cartridgekegel 104 dichtet zudem eine Steuerkammer 110 am hinteren Ende der Axialbohrung 102 ab, derart dass ein Steuerdruck in dieser Steuerkammer 110 auf den Cartridgekegel 104 eine Druckkraft in Schließrichtung ausübt. In Fig. 2 ist der durch den Cartridgekegel 104 in der Axialbohrung 102 zur Steuerkammer 110 abgedichtete Querschnitt mit dem Bezugszeichen 112 bezeichnet. Man beachte, dass dieser abgedichtete Querschnitt 112 größer als der vom Cartridgekegel 104 im Ventilsitz 108 abgedichtete Querschnitt ist. Über einen Steuerölanschluss 114 ist die Steuerkammer 110 an ein externes Schaltventil 116 angeschlossen (siehe auch Fig. 3). Die Ventilhülse 100 ist derart in den versorgungsseitigen Kupplungsblock 30 eingebaut, dass ihre vordere Stirnfläche 120 in einer Ebene mit der Ankupplungsfläche 36 liegt. Bei offenem Cartridgeventil 40, bildet die Axialbohrung 102 in der Stirnfläche 120 der Ventilhülse 100, eine stirnseitige Ventilausgangsöffnung aus. Wenn bei geschlossenem Cartridgeventil 40, wie in Fig. 2 gezeigt, der Cartridgekegel 104 auf seinem Ventilsitz 108 aufliegt, wird diese stirnseitige Ventilausgangsöffnung jedoch durch einen zylindrischen Ansatz 122 des Cartridgekegels 104 komplett verschlossen, wobei die Stirnfläche des Ansatzes 122 in einer Ebene mit der vorderen Stirnfläche 120 liegt. Ein axial wirkender Dichtring 121 ist in eine Ringnut der Stirnfläche 120 der Ventilhülse 100 derart eingebaut, dass er beim entkuppelten Kupplungsblock 30 aus der Ankupplungsfläche 36 leicht herausragt. Der Anschlusskanal 74 mündet im Kupplungsblock 30 in einen Ringraumanschluss 130 ein, welcher in der Stufenbohrung 101 des Kupplungsblocks 30 beidseitig durch die Ventilhülse 100 abgedichtet wird. Letztere weist in diesem Ringraumanschluss 130 mehrere seitliche Öffnungen 132 auf, über welche die Hydraulikflüssigkeit aus dem Ringraumanschluss 130 in die Axialbohrung 102 des Cartridgeventils 40 einmündet. Bei offenem Cartridgeventil 40 kann die Hydraulikflüssigkeit dann über den Ventilsitz 108 in die stirnseitige Ventilausgangsöffnung der Axialbohrung 102 einströmen. Bei geschlossenem Cartridgeventil 40 dichtet der Cartridgekegel 104 in der Axialbohrung 102 eine anschlussseitige Ventilkammer 134 zwischen dem Ventilsitz 108 und dem abgedichteten Querschnitt 112 ab, wobei ein Druck in der Ventilkammer 134 eine Druckkraft in Öffnungsrichtung erzeugt.

Das Cartridgeventil 44 ist als federbelastetes 2-Wege-Einbauventil aufgebaut. Es umfasst eine Ventilhülse 200 die in eine Stufenbohrung 201 des Kupplungsblocks 34 eingesetzt ist. Diese Ventilhülse 200 weist eine Axialbohrung 202 auf, in der ein Cartridgekegel 204 derart eingepasst ist, dass er hierin axial verschiebbar ist. Eine Schließfeder 206 drückt diesen Cartridgekegel 204 in Richtung eines Ventilsitzes 208 am vorderen Ende der Axialbohrung 202. Die Schließfeder 206 ist in einer eine Federkammer 210 angeordnet, welche innerhalb der Axialbohrung 202 von dem Cartridgekegel 204 abgedichtet wird. Eine Verbindungsbohrung 212 verbindet die Federkammer 210 mit einer Ölkammer 214, welche über einen Filter 216 belüftetet ist (siehe Fig. 4). Die Federkammer 210 ist folglich immer mit drucklosem Öl gefüllt, so dass eine Schmierung des Catridgekegels in der Axialbohrung 202 gewährleistet ist, wobei sich jedoch kein wesentlicher Gegendruck in der Federkammer 210 aufbauen kann. Die Ventilhülse 200 ist derart in den verbraucherseitigen Kupplungsblock 34 eingebaut, dass ihre vordere Stirnfläche 220 in einer Ebene mit der Ankupplungsfläche 38 liegt. In dieser Stirnfläche 220 bildet die Axialbohrung 202, bei offenem Cartridgeventil 44, eine stirnseitige Ventileingangsöffnung aus. Wenn bei geschlossenem Cartridgeventil 44, wie in Fig. 2 gezeigt, der Cartridgekegel 204 auf seinem Ventilsitz 208 aufliegt, wird diese stirnseitige Ventileingangsöffnung jedoch durch einen zylindrischen Ansatz 222 des Cartridgekegels 204 komplett verschlossen, wobei die Stirnfläche dieses Ansatzes 222 in einer Ebene mit der vorderen Stirnfläche 220 der Ventilhülse 200 liegt. Ein verbraucherseitiger Anschlusskanal 224 ist im Kupplungsblock 34 mit einem Ringraumanschluss 230 verbunden, welcher in der Stufenbohrung 201 beidseitig durch die Ventilhülse 200 abgedichtet wird. Letztere weist in diesem Ringraumanschluss 230 mehrere seitliche Öffnungen 232 auf, über welche die Hydraulikflüssigkeit aus der Axialbohrung 202 des Cartridgeventils 44 in den Ringraumanschluss 230 einmünden kann. Man beachte, dass der von der Ventilhülse 200 in der Stufenbohrung 201 abgedichtete hintere Querschnitt D1, kleiner als der abgedichtete vordere Querschnitt D2 ist. Die Ventilhülse 200, welche axial verschiebbar in die Stufenbohrung 201 des verbraucherseitigen Kupplungsblocks 34 eingesetzt ist, weist folglich in dem Ringraumanschluss 230 eine Druckdifferenzfläche auf, welche bewirkt, dass das verbraucherseitige Cartridgeventil 44 durch einen Druck im Ringraumanschluss 230 in Richtung des angekuppelten versorgungsseitigen Kupplungsblocks 34 gedrückt wird. Ein Sicherungsring 234 bildet in der Stufenbohrung 201 des Kupplungsblocks 34 einen Endanschlag für die Ventilhülse 200 aus.

Die Funktionsweise der Kupplungsvorrichtung 14 ist wie folgt.

Nach dem der verbraucherseitige Kupplungsblock 34 seine in Fig. 1 gezeigte Endstellung erreicht hat, werden die beiden hydraulischen Spannzylinder 50, 52 eingefahren, wobei die beiden Ankupplungsflächen 36, 38 der Kupplungsblöcke 30, 34 fest aneinander gepresst werden. Erst danach wird der hydraulische Kupplungsvorgang eingeleitet.

Wird der Anschluss 16 über das Funktionsventil 20 mit dem Druckmedium versorgt, baut sich in der Ventilkammer 134 ein Druck auf, der auf den Cartridgekegel 104 eine Druckkraft in Öffnungsrichtung erzeugt. Wird die Steuerkammer 110 über das Schaltventil 116 und die Druckleitung 117 mit dem gleichen Druck beaufschlagt, so ist der Cartridgekegel 104 hydrostatisch ausgeglichen und die Schließfeder 106 hält den Cartridgekegel 104 in Schließstellung auf seinem Ventilsitz 108. Wird die Steuerkammer 110 über das Schaltventil 116 und die Tankleitung 119 drucklos geschaltet, so überwindet der Druck in der Ventilkammer 134 die auf den Cartridgekegel 104 wirkende Federkraft und drückt den Cartridgekegel 104 von seinem Ventilsitz 108. Das Cartridgeventil 40 öffnet und die Hydraulikflüssigkeit strömt in die stirnseitige Ausgangsöffnung der Axialbohrung 102 des Cartridgeventils 40 ein. Der sich in dieser Ausgangsöffnung aufbauende Druck öffnet das Cartridgeventil 40. Die Stirnfläche des Cartridgekegel 204 des gegenüberliegenden Cartridgeventils 44 wird nun über den Ventilsitz 208 ebenfalls mit dem Arbeitsdruck beaufschlagt und öffnet, da der Cartridgekegel 204 im Federraum 210 ständig zur Atmosphäre drucklos entlastet ist. Die Hydraulikflüssigkeit kann nun über den Ventilsitz 208 in die Axialbohrung 202 einströmen und von hier, über die seitlichen Öffnungen 232 der Ventilhülse 200 in den Ringraumanschluss 230 überströmen und in den Anschlusskanal 224 einfließen. Man beachte, dass der Druckaufbau in dem Ringraumanschluss 230 auf die axial verschiebbare Ventilhülse 200 eine druckabhängige Kraft ausübt, welche diese Ventilhülse 200 mit ihrer Stirnfläche 220 gegen die Stirnfläche 120 mit dem eingesetzten Dichtring 121 des Cartridgeventils 40 presst. Durch dieses axiale, druckabhängige Anpressen der verschiebbaren Ventilhülse 200 des verbraucherseitigen Cartridgeventils 44 an die fest eingebaute Ventilhülse 100 des versorgungsseitigen Cartridgeventils 40 werden axiale Einbautoleranzen der Cartridgeventil 40, 44 ausgeglichen und die Dichtwirkung wird wesentlich verbessert.

Wird der Anschluss 16 über das Funktionsventil 20 drucklos geschaltet, schließen die beiden Cartridgeventile 40, 44 sozusagen gleichzeitig. Man beachte, dass die beiden Ansätze 122 und 222 der Cartridgekegel verhindern, dass sich beim Schließvorgang Hydraulikflüssigkeit zwischen den beiden Cartridgeventile 40, 44 anstaut, die beim Entkuppeln der beiden Kupplungsblöcke 30, 34 auslaufen könnte. Das Entkuppeln geschieht also weitgehend leckagefrei.

## Patentansprüche

1. Hydraulische Kupplungsvorrichtung umfassend:
einen versorgungsseitigen Kupplungsblock (30) mit einer Ankupplungsfläche (36), mindestens einem hydraulischen Anschlusskanal (74) und einem Cartridgeventil (40), das dem mindestens einem Anschlusskanal (74) zugeordnet ist, wobei dieses Cartridgeventil (40) aufweist:
eine Ventilhülse (100) mit einer Stirnfläche (120) und einer Axialbohrung (102) die in dieser Stirnfläche (120) eine stirnseitige Mündung ausbildet vor der ein Ventilsitz (108) angeordnet ist, wobei die Ventilhülse (100) derart in eine Stufenbohrung (101) des versorgungsseitige Kupplungsblocks (30) eingesetzt ist, dass ihre Stirnfläche (120) in seiner Ankupplungsfläche (36) liegt;
ein Cartridgekegel (104) der axial verschiebbar in die Axialbohrung (102) der Ventilhülse (100) eingepasst ist, wobei sein erstes Ende in Schließstellung den Ventilsitz (108) abdichtet und sein zweites Ende in einer Steuerkammer (110) eine Steuerfläche derart ausbildet, dass ein Steuerdruck in dieser Steuerkammer (110) auf den Cartridgekegel (104) eine Druckkraft in Richtung Schließstellung ausübt; und
eine Schließfeder (106), die dem Cartridgekegel (104) derart zugeordnet ist, dass sie auf den Cartridgekegel (104) eine Druckkraft in Richtung Schließstellung ausübt;
wobei der hydraulische Anschlusskanal (74) über seitliche Öffnungen der Ventilhülse (100) in eine Ventilkammer (134) des Cartridgeventils (40) derart einmündet, dass ein Arbeitsdruck in dieser Ventilkammer (134) auf den Cartridgekegel (104) eine Druckkraft in Öffnungsrichtung ausübt;
einen verbraucherseitigen Kupplungsblock (34) mit einer Ankupplungsfläche (38), mindestens einem hydraulischen Anschlusskanal (224) und einem Cartridgeventil (44) das dem mindestens einem Anschluss (224) zugeordnet ist, wobei das verbraucherseitige Cartridgeventil (44) aufweist:
eine Ventilhülse (200) mit einer Stirnfläche (220) und einer Axialbohrung (202), die in dieser Stirnfläche (220) eine stirnseitige Mündung ausbildet vor der ein Ventilsitz (208) angeordnet ist, wobei die Ventilhülse (200) derart in eine Stufenbohrung (201) des verbraucherseitigen Kupplungsblocks (34) eingesetzt ist, dass ihre Stirnfläche (220) in seiner Ankupplungsfläche (38) liegt;
ein Cartridgekegel (104), der axial verschiebbar in die Axialbohrung (202) der Ventilhülse (200) eingepasst ist, wobei sein erstes Ende in Schließstellung den Ventilsitz (208) abdichtet und sein zweites Ende in einer druckentlasteten Kammer (210) liegt; und
eine Schließfeder (206), die dem Cartridgekegel (104) derart zugeordnet ist, dass sie auf den Cartridgekegel (104) eine Druckkraft in Richtung Schließstellung ausübt;
Anpressmittel (50, 52) zum Aneinanderpressen des versorgungsseitigen Kupplungsblocks (30) an den verbraucherseitigen Kupplungsblock (34), derart dass die Ankupplungsflächen (36, 38) der Kupplungsblöcke (30, 34) aneinander liegen und die Cartridgeventile (40, 44) axial mit den Stirnflächen (120, 220) ihrer Ventilhülsen (100, 200) aneinander gepresst werden; und
Druckschaltmittel (116) zur kontrollierten Druckbelastung und Druckentlastung der Steuerkammer (110) des versorgungsseitigen Cartridgeventils (40), derart dass:
(a) bei Druckbelastung dieser Steuerkammer (110), der Druck in der Steuerkammer (110) und die Schließfeder (106) eine Schließkraft erzeugen, die größer als die Öffnungskraft des Arbeitsdrucks in der Ventilkammer (134) des versorgungsseitigen Cartridgeventils (40) ist, so dass das erste Cartridgeventil (40) schließt, bzw. geschlossen bleibt; und
(b) bei Druckentlastung dieser Steuerkammer (110), die Schließfeder (106) des versorgungsseitigen Cartridgeventils (40) eine Schließkraft erzeugt, die kleiner als die Öffnungskraft des Arbeitsdrucks in der Ventilkammer (108) des versorgungsseitigen Cartridgeventils (40) ist, so dass das versorgungsseitige Cartridgeventil (40) öffnet, bzw. geöffnet bleibt.

2. Vorrichtung nach Anspruch 1, **dadurch gekennzeichnet, dass** einer der beiden Kupplungsblöcke (30) derart verschiebbar auf einen Adapterblock (36) montiert ist, dass die Anpressmittel (50, 52) diesen Kupplungsblock (30) an den anderen Kupplungsblock (34) festziehen können.

3. Vorrichtung nach Anspruch 2, **dadurch gekennzeichnet, dass** zwischen dem verschiebbar montierten Kupplungsblock (30) und seinem Adapterblock (36) mindestens eine Rückstellfeder (80) derart angeordnet ist, dass sie nach dem Lösen der Anpressmittel (50, 52), durch Verschieben dieses Kupplungsblocks (30) einen Distanzspalt zwischen den beiden Ankupplungsflächen (36, 38) der Kupplungsblöcke (30, 34) herstellt.

4. Vorrichtung nach Anspruch 2 oder 3, **dadurch gekennzeichnet, dass** der Kupplungsblock (30) mindestens ein Degenrohr (60) aufweist, das in eine Bohrung seines Adapterblocks (36) axial verschiebbar eingeführt ist, wobei der hydraulische Anschluss zwischen Kupplungsblock (30) und Adapterblock (36) über eine Längsbohrung (70) im Degenrohr (60) und eine Ringkammer (68) im Adapterblock (36) erfolgt, und wobei das Degenrohr (60) derart gestaltet ist, dass es diese Ringkammer (68) an zwei axial gegenüberliegenden Enden hydrostatisch ausgeglichen abdichtet.

5. Vorrichtung nach einem der Ansprüche 1 bis 4, **dadurch gekennzeichnet, dass** die Anpressmittel Spannzylinder (50, 52) umfassen, welche am versorgungsseitigen Kupplungsblock (30) angeordnet sind und Kupplungsköpfe (54, 56) aufweisen, die in entsprechende Nuten (54', 56') des verbraucherseitigen Kupplungsblocks (30) eingreifen.

6. Vorrichtung nach einem der Ansprüche 1 bis 5, **dadurch gekennzeichnet, dass** die Ventilhülse (100) eines der beiden Cartridgeventile (40) in ihrer Stirnfläche (120) eine axial wirkende Ringdichtung (121) aufweist, welche derart angeordnet ist, dass sie in Kupplungsstellung an die Stirnfläche (220) des gegenüberliegenden Cartridgeventils (44) angedrückt wird.

7. Vorrichtung nach einem der Ansprüche 1 bis 6, **dadurch gekennzeichnet, dass** die Ventilhülse (200) des verbraucherseitigen Cartridgeventils (44) axial verschiebbar in eine Stufenbohrung (201) des verbraucherseitigen Kupplungsblocks (34) eingesetzt ist, wobei sie in dieser Stufenbohrung (201) eine Druckdifferenzfläche derart ausbildet, dass auf diese Ventilhülse (200) eine Druckkraft in Richtung des angekuppelten versorgungsseitigen Kupplungsblocks (34) ausgeübt wird, wenn diese Druckdifferenzfläche in der Stufenbohrung (201) mit Druck beaufschlagt wird.

8. Vorrichtung nach Anspruch 7, wobei ein Sicherungsring (234) in der Stufenbohrung (201) des verbraucherseitigen Kupplungsblocks (34) einen Endanschlag für die Ventilhülse (200) des verbraucherseitigen Cartridgeventils (44) ausbildet.

9. Vorrichtung nach einem der Ansprüche 1 bis 8, **dadurch gekennzeichnet, dass** das verbraucherseitige Cartridgeventil (44) eine Federkammer (210 aufweist, die mit einem druckfreien Ölspeicher (214) verbunden ist.

10. Vorrichtung nach einem der Ansprüche 1 bis 9, **dadurch gekennzeichnet, dass:**
der versorgungsseitige Kupplungsblock (30) n Anschlusskanäle (74) aufweist, denen jeweils ein Cartridgeventil (40) zugeordnet ist; und
der verbraucherseitige Kupplungsblock n Anschlusskanäle (224) aufweist, denen jeweils ein Cartridgeventil (44) zugeordnet ist;
wobei n>1 und bei gekuppelten Kupplungsblöcken (30, 34) die versorgungs- und verbraucherseitigen Cartridgeventile (40, 44) axial mit den Stirnflächen (120, 220) ihrer Ventilhülsen (100, 200) aneinander gepresst werden.

11. Vorrichtung nach Anspruch 10, wobei die versorgungs- und verbraucherseitigen Cartridgeventile (40, 44) jeweils in einer Reihe liegen und die Anpressmittel zwei Spannzylinder (50, 52) umfassen, welche am versorgungsseitigen Kupplungsblock (34) jeweils vor dem ersten und nach dem letzten versorgungsseitigen Cartridgeventil (40) angeordnet sind.

## Claims

1. Hydraulic coupling device comprising:
a supply-side coupling block (30) having a coupling face (36), at least one hydraulic connecting duct (74) and a cartridge valve (40) which is associated with the at least one connecting duct (74), wherein said cartridge valve (40) has:
a valve sleeve (100) having an end face (120) and an axial bore (102) which forms an end-side orifice in said end face (120), upstream of which orifice is arranged a valve seat (108), wherein the valve sleeve (100) is inserted into a stepped bore (101) of the supply-side coupling block (30) in such a way that the end face (120) of said valve sleeve (100) is situated in the coupling face (36) of said coupling block (30);
a cartridge cone (104) which is fitted in an axially displaceable manner into the axial bore (102) of the valve sleeve (100), wherein the first end of said cartridge cone (104), in a closed position, seals off the valve seat (108), and the second end of which cartridge cone (104) forms, in a control chamber (110), a control face, in such a way that a control pressure in said control chamber (110) exerts a pressing force on the cartridge cone (104) in the direction of a closed position; and
a closing spring (106) which is associated with the cartridge cone (104) in such a way that it exerts a pressing force on the cartridge cone (104) in the direction of a closed position;
wherein the hydraulic connecting duct (74) opens out into a valve chamber (134) of the cartridge valve (40) via lateral openings of the valve sleeve (100) in such a way that a working pressure in said valve chamber (134) exerts a pressing force on the cartridge cone (104) in the opening direction;
a load-side coupling block (34) having a coupling face (38), at least one hydraulic connecting duct (224) and a cartridge valve (44) which is associated with the at least one connecting duct (224), wherein the load-side cartridge valve (44) has:
a valve sleeve (200) having an end face (220) and an axial bore (202) which forms an end-side orifice in said end face (220), upstream of which orifice is arranged a valve seat (208), wherein the valve sleeve (200) is inserted into a stepped bore (201) of the load-side coupling block (34) in such a way that the end face (220) of said valve sleeve (200) is situated in the coupling face (38) of said coupling block (34);
a cartridge cone (104) which is fitted in an axially displaceable manner into the axial bore (202) of the valve sleeve (200), wherein the first end of said cartridge cone (104), in a closed position, seals off the valve seat (208), and the second end of which cartridge cone (104) is situated in a depressurized chamber (210); and
a closing spring (206) which is associated with the cartridge cone (104) in such a way that it exerts a pressing force on the cartridge cone (104) in the direction of a closed position;
pressing means (50, 52) for pressing the supply-side coupling block (30) and the load-side coupling block (34) against one another, in such a way that the coupling faces (36, 38) of the coupling blocks (30, 34) bear against one another and the end faces (120, 220) of the valve sleeves (100, 200) of the cartridge valves (40, 44) are pressed against one another axially; and
pressure switching means (116) for controlled pressurization and depressurization of the control chamber (110) of the supply-side cartridge valve (40), in such a way that:
(a) when said control chamber (110) is pressurized, the pressure in the control chamber (110) and the closing spring (106) generate a closing force which is greater than the opening force of the working pressure in the valve chamber (134) of the supply-side cartridge valve (40), so that the first cartridge valve (40) closes or remains closed; and
(b) when said control chamber (110) is depressurized, the closing spring (106) of the supply-side cartridge valve (40) generates a closing force which is less than the opening force of the working pressure in the valve chamber (108) of the supply-side cartridge valve (40), so that the supply-side cartridge valve (40) opens or remains open.

2. Device according to Claim 1, **characterized in that** one of the two coupling blocks (30) is displaceably mounted on an adaptor block (36) in such a way that the pressing means (50, 52) can tighten said coupling block (30) against the other coupling block (34).

3. Device according to Claim 2, **characterized in that** at least one return spring (80) is arranged between the displaceably mounted coupling block (30) and its adaptor block (36) in such a way that, after the pressing means (50, 52) have been released, said return spring (80), by displacing said coupling block (30), produces a spacing gap between the two coupling faces (36, 38) of the coupling blocks (30, 34).

4. Device according to Claim 2 or 3, **characterized in that** the coupling block (30) has at least one wash pipe (60) which is inserted in an axially displaceable manner into a bore of the adaptor block (36) of said coupling block (30), wherein the hydraulic connection between the coupling block (30) and the adaptor block (36) is provided by means of a longitudinal bore (70) in the wash pipe (60) and an annular chamber (68) in the adaptor block (36), and wherein the wash pipe (60) is formed in such a way that it seals off said annular chamber (68) at two axially opposite ends in a hydrostatically equalized manner.

5. Device according to one of Claims 1 to 4, **characterized in that** the pressing means comprise clamping cylinders (50, 52) which are arranged on the supply-side coupling block (30) and have coupling heads (54, 56) which engage in corresponding grooves (54', 56') of the load-side coupling block (34).

6. Device according to one of Claims 1 to 5, **characterized in that** the valve sleeve (100) of one of the two cartridge valves (40) has an axially acting annular seal (121) in its end face (120), said annular seal (121) being arranged such that, in the coupling position, it is pressed against the end face (220) of the opposite cartridge valve (44).

7. Device according to one of Claims 1 to 6, **characterized in that** the valve sleeve (200) of the load-side cartridge valve (44) is inserted in an axially displaceable manner into a stepped bore (201) of the load-side coupling block (34), wherein a pressure differential face is formed in said stepped bore (201) in such a way that a pressing force is exerted on said valve sleeve (200) in the direction of the coupled-on supply-side coupling block (34) when said pressure differential face in the stepped bore (201) is acted on with pressure.

8. Device according to Claim 7, wherein a securing ring (234) in the stepped bore (201) of the load-side coupling block (34) forms an end stop for the valve sleeve (200) of the load-side cartridge valve (44).

9. Device according to one of Claims 1 to 8, **characterized in that** the load-side cartridge valve (44) has a spring chamber (210) which is connected to an unpressurized oil store (214).

10. Device according to one of Claims 1 to 9, **characterized in that**:
the supply-side coupling block (30) has n connecting ducts (74), with which is associated in each case one cartridge valve (40); and
the load-side coupling block has n connecting ducts (224), with which is associated in each case one cartridge valve (44);
wherein n>1 and, when the coupling blocks (30, 34) are coupled, the end faces (120, 220) of the valve sleeves (100, 200) of the supply-side and load-side cartridge valves (40, 44) are pressed against one another axially.

11. Device according to Claim 10, wherein the supply-side and load-side cartridge valves (40, 44) are in each case situated in a row and the pressing means comprise two clamping cylinders (50, 52) which are arranged on the supply-side coupling block (34) in each case upstream of the first and downstream of the last supply-side cartridge valve (40).

## Revendications

1. Dispositif d'accouplement hydraulique comprenant :
un bloc d'accouplement (30) côté alimentation avec une face de couplage (36), comprenant au moins un canal de raccordement (74) hydraulique et une soupape de type cartridge (40), qui est attribuée à au moins un canal de raccordement (74), cette soupape de type cartridge (40) présentant :
une douille de soupape (100) avec une face frontale (120) et un alésage axial (102) qui forme dans cette face frontale (120) un orifice côté avant, devant lequel est disposé un siège de soupape (108), la douille de soupape (100) étant insérée dans un alésage à gradins (101) du bloc d'accouplement (30) côté alimentation de telle sorte que sa face frontale (120) est disposée dans sa surface d'accouplement (36) ;
un cône de type cartridge (104), qui est emboîté en coulissant axialement dans l'alésage axial (102) de la douille de soupape (100), sa première extrémité rendant étanche le siège de soupape dans la position de fermeture et sa seconde extrémité formant dans une chambre de commande (110) une surface de commande de telle sorte qu'une pression de commande dans cette chambre de commande (110) exerce sur le cône de type cartridge (40) une force de pression en direction de la position de fermeture ; et
un ressort de fermeture (106), qui est attribué au cône de type cartridge (104) de telle sorte qu'il exerce sur le cône de type cartridge (104) une force de pression en direction de la position de fermeture ;
le canal de raccordement (74) hydraulique débouchant au moyen d'orifices latéraux de la douille de soupape (100) dans une chambre de soupape (134) de la soupape de type cartridge (40) de telle sorte qu'une pression de travail dans cette chambre de soupape (134) exerce sur le cône de type cartridge (104) une force de pression dans le sens d'ouverture ;
un bloc d'accouplement (34) côté consommateur avec une face de couplage (38), au moins un canal de raccordement (224) hydraulique et une soupape de type cartridge (44), qui est attribuée à au moins un raccordement (224), la soupape de type cartridge (44) côté consommateur présentant les éléments suivants :
une douille de soupape (200) avec une face frontale (220) et un alésage axial (202), qui forme dans cette face frontale (220) un orifice côté avant, devant lequel est disposé un siège de soupape (208), la douille de soupape (200) étant insérée dans un alésage à gradins (200) du bloc d'accouplement (34) côté consommateur de telle sorte que sa face avant (220) est disposée dans sa face de couplage (38) ;
un cône de type cartridge (104), qui est emboîté de façon coulissante axialement dans l'alésage axial (202) de la douille de soupape (200), sa première extrémité rendant étanche le siège de soupape (208) dans la position de fermeture et sa seconde extrémité étant disposée dans une chambre (210) déchargée en pression ; et
un ressort de fermeture (206), qui est attribué au cône de type cartridge (104), de telle sorte qu'il exerce sur le cône de type cartridge (104) une force de pression en direction de la position de fermeture,
des moyens d'appui (50, 52) pour presser le bloc d'accouplement (30) côté orientation sur le bloc d'accouplement (4) côté consommateur, de telle sorte que les faces de couplage (36, 38) des blocs d'accouplement (30, 34) s'appuient les unes sur les autres et les soupapes de type cartridge (40, 44) sont pressées axialement avec les faces avant (120, 220) de leurs douilles de soupape (100, 200) les unes sur les autres, et
des moyens de commutation de pression (116) pour la charge de pression contrôlée et la décharge de pression de la chambre de commande (110) de la soupape de type cartridge (40) côté alimentation, de telle sorte que :
(a) en cas de charge de pression de cette chambre de commande (110), la pression dans la chambre de commande (110) et le ressort de fermeture (106) génèrent une force de fermeture qui est supérieure à la force d'ouverture de la pression de travail dans la chambre de soupape (134) de la soupape de type cartridge (40) côté alimentation, de sorte que la première soupape de type cartridge (40) ferme, ou reste fermée ; et
(b) en cas de décharge de pression de cette chambre de commande (110), le ressort de fermeture (106) de la soupape de type cartridge (40) côté alimentation génère une force de fermeture qui est inférieure à la force d'ouverture de la pression de travail dans la chambre de soupape (108) de la soupape de type cartridge (40) côté alimentation, de sorte que la soupape de type cartridge (40) côté alimentation s'ouvre ou reste ouverte.

2. Dispositif selon la revendication 1, **caractérisé en ce que** l'un des deux blocs d'accouplement (30) est monté de façon coulissante sur un bloc adaptateur (36) de telle sorte que les moyens de pression (50, 52) peuvent serrer ce bloc d'accouplement (30) sur l'autre bloc d'accouplement (34).

3. Dispositif selon la revendication 2, **caractérisé en ce que** entre le bloc d'accouplement (30) monté de façon coulissante et son bloc adaptateur (36) est disposé au moins un ressort de rappel (80) de telle sorte que, après le détachement des moyens de pression (50, 52), il établit par le coulissement de ce bloc d'accouplement (30) une fente d'écartement entre les deux faces de couplage (36, 38) des blocs d'accouplement (30, 34).

4. Dispositif selon la revendication 2 ou 3, **caractérisé en ce que** le bloc d'accouplement (30) présente au moins un tube d'usure (60), qui est introduit dans un alésage de son bloc adaptateur (36) de façon coulissante axialement, le branchement hydraulique entre le bloc d'accouplement (30) et le bloc adaptateur (36) s'effectuant au moyen d'un alésage longitudinal (70) dans le tube d'usure (60) et au moyen d'une chambre annulaire (70) dans le bloc adaptateur (36), et le tube d'usure (60) étant conçu de telle sorte qu'il assure l'étanchéité de cette chambre annulaire (68) sur deux extrémités axialement opposées avec un équilibrage hydrostatique.

5. Dispositif selon l'une quelconque des revendications 1 à 4, **caractérisé en ce que** les moyens d'appui comprennent des cylindres de serrage (50, 52), qui sont disposés sur le bloc d'accouplement (30) côté alimentation et présentent des têtes d'accouplement (54, 56), qui s'engagent dans des rainures (54', 56') appropriées du bloc d'accouplement (30) côté consommateur.

6. Dispositif selon l'une quelconque des revendications 1 à 5, **caractérisé en ce que** la douille de soupape (100) de l'une des deux soupapes de type cartridge (40) présente dans sa face frontale (120) un joint annulaire (121) à effet axial, qui est disposé de telle sorte qu'il est appuyé dans la position d'accouplement sur la face frontale (220) de la soupape de type cartridge (44) opposée.

7. Dispositif selon l'une quelconque des revendications 1 à 6, **caractérisé en ce que** la douille de soupape (200) de la soupape de type cartridge (44) côté consommateur est insérée de façon coulissante axialement dans un alésage à gradins (201) du bloc d'accouplement (34) côté consommateur, une face de différence de pression étant réalisée dans cet alésage à gradins (201) de telle sorte qu'une force de pression est exercée sur cette douille de soupape (200) en direction du bloc d'accouplement (34) accouplé côté alimentation lorsque cette face de différence de pression est alimentée en pression dans l'alésage à gradins (201).

8. Dispositif selon la revendication 7, un circlip (234) dans l'alésage à gradins (201) du bloc d'accouplement (34) côté consommateur formant une butée finale pour la douille de soupape (200) de la soupape de type cartridge (44) côté consommateur.

9. Dispositif selon l'une quelconque des revendications 1 à 8, **caractérisé en ce que** la soupape de type cartridge (44) côté consommateur présente une chambre de ressort (210) qui est reliée à une réserve d'huile (214) sans pression.

10. Dispositif selon l'une quelconque des revendications 1 à 9, **caractérisé en ce que** :
le bloc d'accouplement (30) côté alimentation présente n canaux de raccordement (74), à chacun desquels est attribuée une soupape de type cartridge (40) ; et
le bloc d'accouplement côté consommateur présente n canaux de branchement (224), à chacun desquels est attribuée une soupape de type cartridge (44) ;
n > 1 et, dans le cas des blocs d'accouplement (30, 34) couplés, les soupapes de type cartridge (40, 44) côté alimentation et côté consommateur sont pressées les unes sur les autres axialement avec les faces frontales (120, 220) de leurs douilles de soupape (100, 200).

11. Dispositif selon la revendication 10, les soupapes de type cartridge (40, 44) côté alimentation et consommateur étant disposées respectivement dans une rangée et les moyens d'appui comprenant deux cylindres de serrage (50, 52), qui sont disposés sur le bloc d'accouplement (34) côté alimentation respectivement avant la première soupape de type cartridge (40) et après la dernière soupape de type cartridge (40) côté alimentation.
